# EUROPEAN PATENT SPECIFICATION

(11) **EP 3 443 206 B1**
(45) Date of publication and mention of the grant of the patent: **17.03.2021**
(21) Application number: 17733127.9
(22) Date of filing: 17.04.2017
(51) Int. Cl.: F01L 1/14

(54) **TAPPET WITH SLIDING INNER CUP**
STÖSSEL MIT EINEM INNENGLEITBECHER
POUSSOIR À COUPELLE INTÉRIEURE COULISSANTE

(30) Priority: 15.04.2016 US 201662323192 P
(43) Date of publication of application: 20.02.2019
(73) Proprietor: Koyo Bearings North America LLC, Westlake, OH 44145 (US)
(72) Inventor: THOMAS, Reuben Bickle, Rocky Ford Georgia 30455 (US); GRAB, George, Sylvania Georgia 30467 (US)
(74) Representative: Range, Christopher William
(86) International application number: PCT/US2017/027928
(87) International publication number: WO 2017/181181

(56) References cited:
- EP-A1- 2 812 544
- FR-A1- 2 998 614
- US-A- 2 047 446
- US-A- 5 307 769
- US-A1- 2012 152 187
- US-B1- 7 146 948
- US-B2- 6 799 954

## Description

### FIELD OF THE INVENTION

The present invention relates generally to follower mechanisms. More particularly, the present invention relates to designs and assembly methods of follower mechanisms and their associated alignment devices.

### BACKGROUND OF THE INVENTION

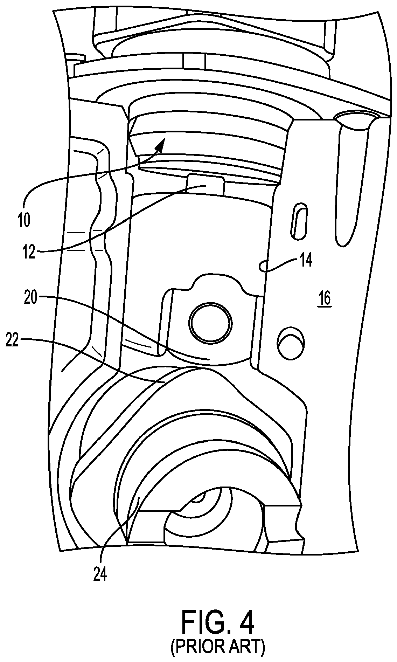

Referring to Figure 4, follower mechanisms 20 are often used in valve trains of an internal combustion engines to transmit motion from a camshaft 24 of the engine to one or more intake or exhaust valves. As camshaft 24 rotates, follower mechanisms 20 receive both a sideways force and a downward force from corresponding lobes 22 on the camshaft, but only transmit the downward force to the valves to open and/or close the valves. Follower mechanisms 20 thereby reduce the possibility of bending or otherwise damaging the valve stems of the valves. As well, follower mechanisms 20 are often used in camshaft driven, high-pressure fuel pumps 10 which are used in gasoline direct injection systems. When so used, the follower mechanisms transmit the forces of the corresponding lobe 22 of the camshaft to a pump stem 12 of the fuel pump.

Existing bucket-type follower mechanisms typically include either a stamped or cold formed bucket. A roller follower is typically supported on a shaft that is directly fixed to the bucket such as by staking, swaging, etc. As such, the bucket is a load bearing member and, therefore, requires heat treatment and operations such as grinding. As well, follower mechanisms often have some form of alignment device carried in an aperture defined by the bucket such that rotation of the follower mechanism within its corresponding bore 14 of engine housing 16 is prevented. As such, a groove must typically be machined into bore 14 for slidably receiving the alignment device, which is both expensive and time consuming. One example of known alignment devices includes a mushroom-shaped pin that is fixed in an aperture of the follower mechanism's bucket. Such pins can be difficult to manufacture because of their complicated shapes. As well, required heat treatments of the bucket can cause distortion of the aperture which receives the alignment device, thereby complicating assembly. Such alignment devices are often fixed in their corresponding apertures by an interference fit. Moreover, as many engine housings are constructed of aluminum, the bores in which the follower mechanisms, typically constructed of steel, reciprocate often require specialized coatings to prevent wear to the US 2 047 446 A discloses a roller tappet with inner and outer cup, the inner cup being guided in the outer cup and secured against rotation.

The present invention recognizes and addresses considerations of prior art constructions and methods.

### SUMMARY OF THE INVENTION

One embodiment of the present disclosure provides a follower mechanism for use in a bore of an internal combustion engine, including an outer sleeve having an inner surface and an outer surface defining a substantially cylindrical side wall, an annular lip portion disposed at a first end of the side wall, and a pair of axially extending shaft grooves that are formed in the inner surface and are parallel to a longitudinal center axis of the follower mechanism, an inner cup including a side wall defining a pair of shaft apertures, the inner cup being slidably disposed in the outer sleeve, a shaft having a first end and a second end, each of second end extending through a corresponding shaft aperture of the inner cup and being slidably disposed in a corresponding one of the shaft grooves, and a roller follower rotatably received on the shaft such that a portion of the roller follower extends axially outwardly beyond the annular lip portion of the outer sleeve. The first and second ends of the shaft are dome-shaped and a cross-sectional shape of each shaft groove is the same as a cross-sectional shape of the first and second shaft ends.

Another embodiment of the present disclosure provides a follower mechanism for use in a bore of an internal combustion engine, including an outer sleeve having an inner surface and an outer surface defining a side wall and a pair of axially extending shaft grooves that are formed in the inner surface of the side wall and are parallel to a longitudinal center axis of the follower mechanism, an inner cup including a side wall defining a pair of shaft apertures, the inner cup being slidably disposed in the outer sleeve, a shaft having a first end and a second end, each of the first end and the second end extending through a corresponding shaft aperture of the inner cup and being slidably disposed in a corresponding one of the shaft grooves, and a roller follower rotatably received on the shaft. The first and second ends of the shaft are dome-shaped and a cross-sectional shape of each shaft groove is the same as a cross-sectional shape of the first and second shaft ends.

Another embodiment of the present disclosure provides a follower mechanism assembly, including an internal combustion engine defining a bore therein, and a camshaft including a lobe, an outer sleeve having an inner surface and an outer surface defining a substantially cylindrical side wall, and a pair of axially extending shaft grooves that are formed in the inner surface and are parallel to a longitudinal center axis of the follower mechanism, an inner cup including a side wall defining a pair of shaft apertures, the inner cup being slidably disposed in the outer sleeve, a shaft having a first end and a second end, each of the first end and the second end extending through a corresponding shaft aperture of the inner cup and being slidably disposed in a corresponding one of the shaft grooves, and a roller follower rotatably received on the shaft, wherein a portion of the roller follower extends axially outwardly beyond the outer sleeve and contacts the lobe of the camshaft. The first and second ends of the shaft are dome-shaped and a cross-sectional shape of each shaft groove is the same as a cross-sectional shape of the first and second shaft ends.

The accompanying drawings, which are incorporated in and constitute a part of this specification, illustrate one or more embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended drawings, in which;
Figures 1A and 1B are perspective views of an embodiment of a follower mechanism in accordance with the present disclosure;
Figures 2A, 2B and 2C are top, bottom and partial views of the follower mechanism shown in Figures 1A and 1B;
Figures 3A and 3B are cross-sectional views of the follower mechanism shown in Figures 1A and 1B, taken along lines 3A-3A and 3B-3B, respectively, of Figure 2A; and
Figure 4 is a partial cross-sectional view of a high pressure fuel pump including a prior art follower mechanism.

Repeat use of reference characters in the present specification and drawings is intended to represent same or analogous features or elements of the invention according to the disclosure.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation, not limitation, of the invention. In fact, it will be apparent to those skilled in the art that modifications and variations can be made in the present invention without departing from the scope and spirit thereof. For instance, features illustrated or described as part of one embodiment may be used on another embodiment to yield a still further embodiment. Thus, it is intended that the present invention covers such modifications and variations as come within the scope of the appended claims and their equivalents.

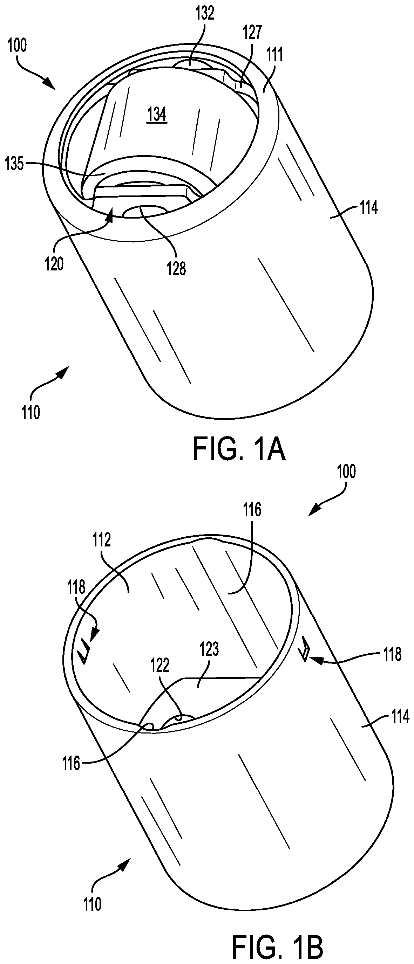

Referring now to the figures, as shown in Figures 1A through 3B, an embodiment of a follower mechanism 100 in accordance with the present disclosure includes a substantially cylindrical outer sleeve 110, an inner cup 120 slidably received therein, and a roller follower 131 supported by inner cup 120. Referring additionally to Figure 4, follower mechanism 100 is preferably used in a high-pressure fuel pump 10 application of an internal combustion engine, although other uses for follower mechanism 100 are possible. As a camshaft 24 of the engine rotates, a lobe 22 of the camshaft, or a rocker arm (not shown) connected to the camshaft, engages roller follower 131 of follower mechanism 100 to convert the rotational motion of camshaft 24 into linear motion of inner cup 120 of follower mechanism 100 within outer sleeve 110, which is fixed in a bore 14 of a corresponding cylinder head 16. A pump stem 12 of pump 10 is positioned within and connected to follower mechanism 100 such that, as follower mechanism 100 moves in a linear direction within bore 14, pump stem 12 is alternatingly moved downwardly by a spring and upwardly by follower mechanism 100. Forces from camshaft 24 are thereby transmitted through follower mechanism 100 to pump 10 such that only forces in substantially the same direction as the motion of pump stem 12 act on pump 10. In addition, follower mechanism 100 serves as a torsional vibration isolation device between camshaft 24 and pump 10 to inhibit rotational forces from being transmitted, as discussed in greater detail below.

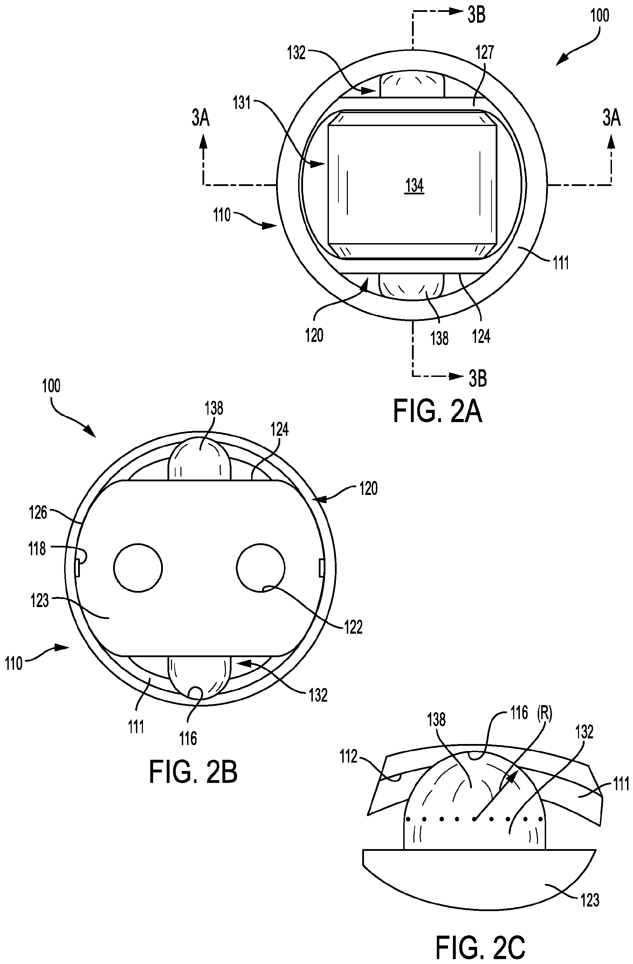

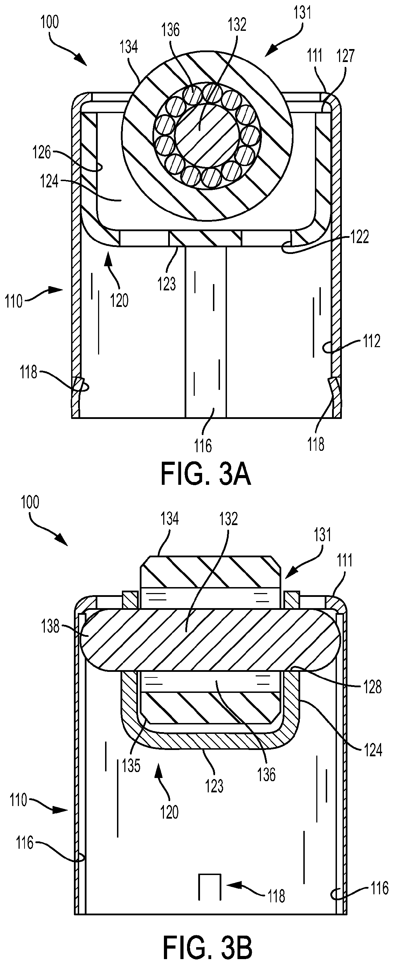

Referring specifically to Figures 3A and 3B, outer sleeve 110 of the present embodiment includes a cylindrical outer surface 114, a cylindrical inner surface 112 substantially concentric therewith, a pair of axially-extending shaft grooves 116 defined on inner surface 112, and a pair of retention features 118 defined at the bottom end outer sleeve 110 for retaining inner cup 120 therein. As shown, retention features 118 are tabs that depend radially inwardly into the interior of outer sleeve and are spaced 180° from each other. Similarly, shaft grooves 116 are spaced 180° from each other and are parallel to the longitudinal center axis of outer sleeve 110. As best seen in Figure 2C, each shaft groove 116 is configured to receive a corresponding end 138 of shaft 132 therein, as discussed in greater detail below. Each shaft groove 116 is spaced 90° from the retention features 118, and vice versa. As noted above, outer sleeve 110 is received in bore 14 of a corresponding cylinder head 16 in a press-fit. As inner surface 112 of outer sleeve 110 acts as the guiding surface for the reciprocating motion of inner cup 120, the need for high quality surface finishes and special coatings for improved wear of bore 14 are not required. As well, the manufacturer of the engine need not machine a groove within bore 14, as the shaft grooves of outer sleeve 110 maintain alignment of the follower assembly, as discussed below.

Outer sleeve 110 is preferably formed from a sheet metal blank of low, medium or high carbon plain or alloy steel by a stamping process, or deep drawing process using a multi-station transfer or progressive press, in which case retention features 118 are formed by, for example, semi-piercing or otherwise cutting into outer sleeve 110. Additionally, outer sleeve 110 includes an annular lip 111, at its top end. As shown, annular lip 111 is the same width as the side wall of outer sleeve, but in alternate embodiments annular lip 111 may be thinner in the radial direction than the remaining side wall of outer sleeve 110, forming an annular ledge therewith. In its initial state, prior to fully assembling follower mechanism 100, annular lip 111 extends axially outwardly parallel to the longitudinal center axis of outer sleeve 110. Alternatively, annular lip 111 may be initially formed depending radially inwardly dependent upon from which end of outer sleeve 110 the inner cup and components of the roller follower are placed into outer sleeve 110. In the alternate case, retention features 118 are formed after inner cup 120 and roller follower 131 are placed in outer sleeve 110 from the bottom end.

As best seen in Figures 3A and 3B, inner cup 120 preferably includes a side wall including two opposed curved portions 126 with two parallel side portions 124 extending therebetween, a bottom wall 123 defining a pair of lubrication apertures 122, and a pair of shaft apertures 128 defined in side portions 124. When fully inserted in outer sleeve 110, inner cup 120 is slidably retained therein by abutment of an upper surface 127 of each curved portion 126 of the side wall with annular lip 111 at the top end of outer sleeve 110, and the abutment of bottom wall 123 with retention features 118 at the bottom end of outer sleeve 110. Referring additionally to Figures 2B and 2C, when inserting inner cup 120 into outer sleeve 110, each end 138 of shaft 132 is slidably received in a corresponding shaft groove 116. As such, inner cup 120 is non-rotatably secured within outer sleeve 110.

Once fully inserted in outer sleeve 110 and rotationally positioned by way of shaft ends 138 being received in shaft grooves 116, inner cup 120 is retained therein by folding annular lip 111 over inwardly, such as by crimping, spin curling, punch forming, etc. Note, since outer sleeve 110 does not directly support shaft 132 of roller follower 131, it does not require heat treatment processes dependent upon the material it is formed with. However, in those applications where heat treatment of outer sleeve 110 is desired for wear purposes, the heat treatment process may occur after retention features 118 are formed. Prior to folding, crimping, etc., annular lip 111 over inwardly, annular lip 111 would then be tempered to facilitate the operation and help prevent cracking.

Preferably, inner cup 120 is formed from a sheet metal blank by a stamping process, or drawing process, and is subjected to heat treatment processes as it directly supports shaft 122 of roller follower 131 and supports the cyclical force exerted by pump stem 190 (Figure 4) on the bottom wall 123 of inner cup 120. Prior to the heat treatment processes, shaft apertures 128 are pierced in side walls 124 of inner cup 120. Similarly, lubrication apertures 122 are also pierced in bottom wall 123 of inner cup 120 prior to any heat treatment processes.

As best seen in Figure 3B, roller follower 131 includes shaft 132, an outer race 134, and a plurality of rollers 136 disposed therebetween such that race 134 is freely rotatable about shaft 132. Shaft 132 extends through shaft apertures 128 so that opposite ends 138 of shaft 132 are received in shaft grooves 116 of outer sleeve 110, thereby mounting roller follower 131 to outer sleeve 110 of follower mechanism 100 by way of the inner cup. Preferably, each end 138 of shaft is semi-spherical and has a radius of curvature (R) that is substantially the same as the radius of curvature of each shaft groove 116 taken in a plane parallel to the longitudinal center axis of the follower mechanism. As such, shaft ends 138 are free to both rotate within and slide axially along shaft grooves 116 when inner cup 120 moves axially within outer sleeve 110. When assembled, roller follower 131 extends axially outwardly beyond the top edge of outer sleeve 110 such that outer surface of race 134 engages a corresponding lobe 22 of camshaft 24, as shown in Figure 4. Preferably, the diameters of shaft apertures 128 are slightly larger than the diameter of shaft 132 such that shaft 132 is free to rotate within shaft apertures 128 during operation. Alternately, the opposing ends of shaft 132 can be staked, swaged, etc., to inner cup 120 such that rotation relative thereto is prevented. Preferably, annular beveled edges 135 are provided on the opposite ends of outer race 134 to allow the overall size of outer race 134 to be maximized, yet not make contact with the inner surface of inner cup 120.

## Claims

1. A follower mechanism (100) for use in a bore (14) of an internal combustion engine, comprising:
an outer sleeve (110) having an inner surface (112) and an outer surface (114) defining a substantially cylindrical side wall, an annular lip portion (111) disposed at a first end of the side wall, and a pair of axially extending shaft grooves (116) that are formed in the inner surface (112) and are parallel to a longitudinal center axis of the follower mechanism (100);
an inner cup (120) including a side wall defining a pair of shaft apertures (128), the inner cup (120) being slidably disposed in the outer sleeve (110);
a shaft (132) having a first end and a second end (138), each of the first end and the second end (138) extending through a corresponding shaft aperture (128) of the inner cup (120) and being slidably disposed in a corresponding one of the shaft grooves (116); and
a roller follower (131) rotatably received on the shaft (132) such that a portion of the roller follower (131) extends axially outwardly beyond the annular lip portion (111) of the outer sleeve (110),
**characterised in that** the first and second ends (138) of the shaft (132) are dome-shaped and a cross-sectional shape of each shaft groove (116) is the same as a cross-sectional shape of the first and second shaft ends (138).

2. The follower mechanism (100) of claim 1, wherein the dome-shape first and the second ends (138) of the shaft (132) is semi-spherical.

3. The follower mechanism (100) of claim 1, wherein the outer sleeve (110) is in a fixed position within the bore (14) of the engine.

4. The follower mechanism (100) of claim 1, wherein the inner cup (120) further comprises a side wall including two opposed curved portions (126), a pair of parallel side portions (124) extending therebetween and a bottom wall (123) that is transverse to the longitudinal center axis of the follower mechanism (100).

5. A follower mechanism (100) for use in a bore (14) of an internal combustion engine, comprising:
an outer sleeve (110) having an inner surface (112) and an outer surface (114) defining a side wall and a pair of axially extending shaft grooves (116) that are formed in the inner surface (112) of the side wall and are parallel to a longitudinal center axis of the follower mechanism (100);
an inner cup (120) including a side wall defining a pair of shaft apertures (128), the inner cup (120) being slidably disposed in the outer sleeve (110);
a shaft (132) having a first end and a second end (138), each of the first end and the second end (138) extending through a corresponding shaft aperture (128) of the inner cup (120) and being slidably disposed in a corresponding one of the shaft grooves (116); and a roller follower (131) rotatably received on the shaft (132),
**characterised in that** the first and second ends (138) of the shaft (132) are dome-shaped and a cross-sectional shape of each shaft groove (116) is the same as a cross-sectional shape of the first and second shaft ends (138).

6. The follower mechanism (100) of claim 5, wherein the dome-shape of the first and the second ends (138) of the shaft (132) is semi-spherical.

7. The follower mechanism (100) of claim 5, wherein the outer sleeve (110) is in a fixed position within the bore (14) of the engine.

8. The follower mechanism (100) of claim 5, wherein the inner cup (120) further comprises a side wall including two opposed curved portions (126), a pair of parallel side portions (124) extending therebetween and a bottom wall (123) that is transverse to the longitudinal center axis of the follower mechanism (100).

9. The follower mechanism (100) of claim 5, wherein the outer sleeve (110) further comprise an annular lip portion (111) disposed at a first end of the side wall.

10. The follower mechanism (100) of claim 9, wherein a portion of the roller follower (131) extends axially outwardly beyond the annular lip portion (111) of the outer cup (110).

11. A follower mechanism assembly, comprising:
an internal combustion engine defining a bore (14) therein, and a camshaft (24) including a lobe (22);
an outer sleeve (110) having an inner surface (112) and an outer surface (114) defining a substantially cylindrical side wall, and a pair of axially extending shaft grooves (116) that are formed in the inner surface (112) and are parallel to a longitudinal center axis of the follower mechanism (100);
an inner cup (120) including a side wall defining a pair of shaft apertures (128), the inner cup (120) being slidably disposed in the outer sleeve (110);
a shaft (132) having a first end and a second end (138), each of the first end and the second end (138) extending through a corresponding shaft aperture (128) of the inner cup (120) and being slidably disposed in a corresponding one of the shaft grooves (116); and a roller follower (131) rotatably received on the shaft (132),
wherein a portion of the roller follower (131) extends axially outwardly beyond the outer sleeve (110) and contacts the lobe (22) of the camshaft (24)
**characterised in that** the first and second ends (138) of the shaft (132) are dome-shaped and a cross-sectional shape of each shaft groove (116) is the same as a cross-sectional shape of the first and second shaft ends (138).

12. The follower mechanism assembly of claim 11, wherein the dome-shape of the first and the second ends (138) of the shaft are semi-spherical.

13. The follower mechanism assembly of claim 11, wherein the outer sleeve (110) is in a fixed position within the bore (14) of the engine.

14. The follower mechanism assembly of claim 13, wherein the inner cup (120) further comprises a side wall including two opposed curved portions (126), a pair of parallel side portions (126) extending therebetween and a bottom wall (123) that is transverse to the longitudinal center axis of the follower mechanism assembly.

## Patentansprüche

1. Stößelmechanismus (100) zur Verwendung in einer Bohrung (14) bei einem Verbrennungsmotor, umfassend:
eine Außenhülse (110) mit einer Innenfläche (112) und einer Außenfläche (114), die eine im Wesentlichen zylindrische Seitenwand definieren, einen ringförmigen Lippenbereich (111), der an einem ersten Ende der Seitenwand angeordnet ist, und ein Paar axial verlaufender Wellennuten (116), die in der Innenfläche (112) ausgebildet sind und parallel zu einer Längsmittelachse des Stößelmechanismus (100) liegen;
eine Innenbuchse (120), die eine Seitenwand aufweist, die ein Paar Wellenöffnungen (128) definiert, wobei die Innenbuchse (120) verschiebbar in der Außenhülse (110) angeordnet ist;
eine Welle (132) mit einem ersten Ende und einem zweiten Ende (138), wobei das erste Ende und das zweite Ende (138) jeweils durch eine zugehörige Wellenöffnung (128) der Innenbuchse (120) verlaufen und verschiebbar in einer zugehörigen der Wellennuten (116) angeordnet sind; und
einen Rollenhebel (131), der drehbar an der Welle (132) derart aufgenommen ist, dass sich ein Abschnitt des Rollenhebels (131) axial nach außen über den ringförmigen Lippenbereich (111) der Außenhülse (110) hinaus erstreckt,
**dadurch gekennzeichnet, dass** das erste und zweite Ende (138) der Welle (132) kuppelförmig ausgebildet sind und eine Querschnittsform der Wellennuten (116) jeweils gleich einer Querschnittsform des ersten und zweiten Wellenendes (138) ausgebildet ist.

2. Stößelmechanismus (100) nach Anspruch 1, wobei die Kuppelform des ersten und zweiten Endes (138) der Welle (132) halbkugelförmig ausgebildet ist.

3. Stößelmechanismus (100) nach Anspruch 1, wobei die Außenhülse (110) in einer ortsfesten Position in der Bohrung (14) des Motors vorgesehen ist.

4. Stößelmechanismus (100) nach Anspruch 1, wobei die Innenbuchse (120) weiter eine Seitenwand, die zwei gegenüberliegende gewölbte Abschnitte (126) aufweist, ein Paar paralleler Seitenbereiche (124), die sich dazwischen erstrecken, und eine Bodenwand (123), die quer zur Längsmittelachse des Stößelmechanismus (100) liegt, umfasst.

5. Stößelmechanismus (100) zur Verwendung in einer Bohrung (14) bei einem Verbrennungsmotor, umfassend:
eine Außenhülse (110) mit einer Innenfläche (112) und einer Außenfläche (114), die eine Seitenwand definieren, und ein Paar axial verlaufender Wellennuten (116), die in der Innenfläche (112) der Seitenwand ausgebildet sind und parallel zu einer Längsmittelachse des Stößelmechanismus (100) liegen;
eine Innenbuchse (120), die eine Seitenwand aufweist, die ein Paar Wellenöffnungen (128) definiert, wobei die Innenbuchse (120) verschiebbar in der Außenhülse (110) angeordnet ist;
eine Welle (132) mit einem ersten Ende und einem zweiten Ende (138), wobei das erste Ende und das zweite Ende (138) jeweils durch eine zugehörige Wellenöffnung (128) der Innenbuchse (120) verlaufen und verschiebbar in einer zugehörigen der Wellennuten (116) angeordnet sind; und einen Rollenhebel (131), der drehbar an der Welle (132) aufgenommen ist,
**dadurch gekennzeichnet, dass** das erste und zweite Ende (138) der Welle (132) kuppelförmig ausgebildet sind und eine Querschnittsform der Wellennuten (116) jeweils gleich einer Querschnittsform des ersten und zweiten Wellenendes (138) ausgebildet ist.

6. Stößelmechanismus (100) nach Anspruch 5, wobei die Kuppelform des ersten und zweiten Endes (138) der Welle (132) halbkugelförmig ausgebildet ist.

7. Stößelmechanismus (100) nach Anspruch 5, wobei die Außenhülse (110) in einer ortsfesten Position in der Bohrung (14) des Motors vorgesehen ist.

8. Stößelmechanismus (100) nach Anspruch 5, wobei die Innenbuchse (120) weiter eine Seitenwand, die zwei gegenüberliegende gewölbte Abschnitte (126) aufweist, ein Paar paralleler Seitenbereiche (124), die sich dazwischen erstrecken, und eine Bodenwand (123), die quer zur Längsmittelachse des Stößelmechanismus (100) liegt, umfasst.

9. Stößelmechanismus (100) nach Anspruch 5, wobei die Außenhülse (110) weiter einen ringförmigen Lippenbereich (111), der an einem ersten Ende der Seitenwand angeordnet ist, umfasst.

10. Stößelmechanismus (100) nach Anspruch 9, wobei sich ein Abschnitt des Rollenhebels (131) axial nach außen über den ringförmigen Lippenbereich (111) der Außenhülse (110) hinaus erstreckt.

11. Stößelmechanismusanordnung, umfassend:
einen Verbrennungsmotor, der darin eine Bohrung (14) definiert, und eine Nockenwelle (24), die einen Nocken (22) aufweist;
eine Außenhülse (110) mit einer Innenfläche (112) und einer Außenfläche (114), die eine im Wesentlichen zylindrische Seitenwand definieren, und ein Paar axial verlaufender Wellennuten (116), die in der Innenfläche (112) ausgebildet sind und parallel zu einer Längsmittelachse des Stößelmechanismus (100) liegen;
eine Innenbuchse (120), die eine Seitenwand aufweist, die ein Paar Wellenöffnungen (128) definiert, wobei die Innenbuchse (120) verschiebbar in der Außenhülse (110) angeordnet ist;
eine Welle (132) mit einem ersten Ende und einem zweiten Ende (138), wobei das erste Ende und das zweite Ende (138) jeweils durch eine zugehörige Wellenöffnung (128) der Innenbuchse (120) verlaufen und verschiebbar in einer zugehörigen der Wellennuten (116) angeordnet sind; und einen Rollenhebel (131), der drehbar an der Welle (132) aufgenommen ist,
wobei sich ein Abschnitt des Rollenhebels (131) axial nach außen über die Außenhülse (110) hinaus erstreckt und den Nocken (22) der Nockenwelle (24) kontaktiert,
**dadurch gekennzeichnet, dass** das erste und zweite Ende (138) der Welle (132) kuppelförmig ausgebildet sind und eine Querschnittsform der Wellennuten (116) jeweils gleich einer Querschnittsform des ersten und zweiten Wellenendes (138) ausgebildet ist.

12. Stößelmechanismusanordnung nach Anspruch 11, wobei die Kuppelform des ersten und zweiten Endes (138) der Welle halbkugelförmig ausgebildet ist.

13. Stößelmechanismusanordnung nach Anspruch 11, wobei die Außenhülse (110) in einer ortsfesten Position in der Bohrung (14) des Motors vorgesehen ist.

14. Stößelmechanismusanordnung nach Anspruch 13, wobei die Innenbuchse (120) weiter eine Seitenwand, die zwei gegenüberliegende gewölbte Abschnitte (126) aufweist, ein Paar paralleler Seitenbereiche (126), die sich dazwischen erstrecken, und eine Bodenwand (123), die quer zur Längsmittelachse der Stößelmechanismusanordnung liegt, umfasst.

## Revendications

1. Mécanisme suiveur (100) destiné à être utilisé dans un trou (14) d'un moteur à combustion interne, comprenant :
un manchon extérieur (110) ayant une surface intérieure (112) et une surface extérieure (114) définissant une paroi latérale essentiellement cylindrique, une partie de lèvre annulaire (111) disposée à une première extrémité de la paroi latérale, et une paire de rainures d'arbre s'étendant axialement (116) qui sont formées dans la surface intérieure (112) et sont parallèles à un axe central longitudinal du mécanisme suiveur (100) ;
une coupelle intérieure (120) incluant une paroi latérale définissant une paire d'ouvertures d'arbre (128), la coupelle intérieure (120) étant disposée coulissante dans le manchon extérieur (110) ;
un arbre (132) ayant une première extrémité et une seconde extrémité (138), chacune de la première extrémité et de la seconde extrémité (138) s'étendant à travers une ouverture d'arbre (128) correspondante de la coupelle intérieure (120) et étant disposée coulissante dans une des rainures d'arbre (116) correspondante ; et
un suiveur à rouleau (131) reçu en rotation sur l'arbre (132) de telle sorte qu'une partie du suiveur à rouleau (131) s'étend axialement vers l'extérieur au-delà de la partie de lèvre annulaire (111) du manchon extérieur (110),
**caractérisé en ce que** les première et seconde extrémités (138) de l'arbre (132) sont en forme de dôme et une forme en coupe de chaque rainure d'arbre (116) est la même qu'une forme en coupe des première et seconde extrémités d'arbre (138).

2. Mécanisme suiveur (100) selon la revendication 1, dans lequel la forme de dôme de la première et de la seconde extrémité (138) de l'arbre (132) est hémisphérique.

3. Mécanisme suiveur (100) selon la revendication 1, dans lequel le manchon extérieur (110) se trouve dans une position fixe dans le trou (14) du moteur.

4. Mécanisme suiveur (100) selon la revendication 1, dans lequel la coupelle intérieure (120) comprend en outre une paroi latérale incluant deux parties incurvées (126) opposées, une paire de parties latérales (124) parallèles s'étendant entre celles-ci et une paroi inférieure (123) qui est transversale par rapport à l'axe central longitudinal du mécanisme suiveur (100).

5. Mécanisme suiveur (100) destiné à être utilisé dans un trou (14) d'un moteur à combustion interne, comprenant :
un manchon extérieur (110) ayant une surface intérieure (112) et une surface extérieure (114) définissant une paroi latérale et une paire de rainures d'arbre s'étendant axialement (116) qui sont formées dans la surface intérieure (112)de la paroi latérale et sont parallèles à un axe central longitudinal du mécanisme suiveur (100) ;
une coupelle intérieure (120) incluant une paroi latérale définissant une paire d'ouvertures d'arbre (128), la coupelle intérieure (120) étant disposée coulissante dans le manchon extérieur (110) ;
un arbre (132) ayant une première extrémité et une seconde extrémité (138), chacune de la première extrémité et de la seconde extrémité (138) s'étendant à travers une ouverture d'arbre (128) correspondante de la coupelle intérieure (120) et étant disposée coulissante dans une des rainures d'arbre (116) correspondante ; et un suiveur à rouleau (131) reçu en rotation sur l'arbre (132),
**caractérisé en ce que** les première et seconde extrémités (138) de l'arbre (132) sont en forme de dôme et une forme en coupe de chaque rainure d'arbre (116) est la même qu'une forme en coupe des première et seconde extrémités d'arbre (138).

6. Mécanisme suiveur (100) selon la revendication 5, dans lequel la forme de dôme de la première et de la seconde extrémité (138) de l'arbre (132) est hémisphérique.

7. Mécanisme suiveur (100) selon la revendication 5, dans lequel le manchon extérieur (110) se trouve dans une position fixe dans le trou (14) du moteur.

8. Mécanisme suiveur (100) selon la revendication 5, dans lequel la coupelle intérieure (120) comprend en outre une paroi latérale incluant deux parties incurvées (126) opposées, une paire de parties latérales (124) parallèles s'étendant entre celles-ci et une paroi inférieure (123) qui est transversale par rapport à l'axe central longitudinal du mécanisme suiveur (100).

9. Mécanisme suiveur (100) selon la revendication 5, dans lequel le manchon extérieur (110) comprend en outre une partie de lèvre annulaire (111) disposée à une première extrémité de la paroi latérale.

10. Mécanisme suiveur (100) selon la revendication 9, dans lequel une partie du suiveur à rouleau (131) s'étend axialement vers l'extérieur au-delà de la partie de lèvre annulaire (111) de la coupelle extérieure (110).

11. Ensemble de mécanisme suiveur comprenant :
un moteur à combustion interne définissant un trou (14) dans celui-ci, et un arbre à cames (24) incluant un lobe (22) ;
un manchon extérieur (110) ayant une surface intérieure (112) et une surface extérieure (114) définissant une paroi latérale essentiellement cylindrique, et une paire de rainures d'arbre s'étendant axialement (116) qui sont formées dans la surface intérieure (112) et sont parallèles à un axe central longitudinal du mécanisme suiveur (100) ;
une coupelle intérieure (120) incluant une paroi latérale définissant une paire d'ouvertures d'arbre (128), la coupelle intérieure (120) étant disposée coulissante dans le manchon extérieur (110) ;
un arbre (132) ayant une première extrémité et une seconde extrémité (138), chacune de la première extrémité et de la seconde extrémité (138) s'étendant à travers une ouverture d'arbre (128) correspondante de la coupelle intérieure (120) et étant disposée coulissante dans une des rainures d'arbre (116) correspondante ; et un suiveur à rouleau (131) reçu en rotation sur l'arbre (132),
dans lequel une partie du suiveur à rouleau (131) s'étend axialement vers l'extérieur au-delà du manchon extérieur (110) et vient au contact du lobe (22) de l'arbre à cames (24)
**caractérisé en ce que** les première et seconde extrémités (138) de l'arbre (132) sont en forme de dôme et une forme en coupe de chaque rainure d'arbre (116) est la même qu'une forme en coupe des première et seconde extrémités d'arbre (138).

12. Ensemble de mécanisme suiveur selon la revendication 11, dans lequel la forme de dôme de la première et de la seconde extrémité (138) de l'arbre est hémisphérique.

13. Ensemble de mécanisme suiveur selon la revendication 11, dans lequel le manchon extérieur (110) se trouve dans une position fixe dans le trou (14) du moteur.

14. Ensemble de mécanisme suiveur selon la revendication 13, dans lequel la coupelle intérieure (120) comprend en outre une paroi latérale incluant deux parties incurvées (126) opposées, une paire de parties latérales (126) parallèles s'étendant entre celles-ci et une paroi inférieure (123) qui est transversale par rapport à l'axe central longitudinal de l'ensemble de mécanisme suiveur.
